# EUROPÄISCHE PATENTANMELDUNG

(11) **EP 0 856 274 A1**
(43) Veröffentlichungstag der Anmeldung: **05.08.1998**
(21) Anmeldenummer: 97101719.9
(22) Anmeldetag: 04.02.1997
(51) Int. Cl.: A47J 43/28

(54) **Küchengerät zum Verkosten von Speisen**

(71) Anmelder: Schassberger, Ernst-Ulrich, 73667 Kaisersbach-Ebni (DE)
(72) Erfinder: Schassberger, Ernst-Ulrich, 73667 Kaisersbach-Ebni (DE)
(74) Vertreter: Dreiss, Fuhlendorf, Steimle & Becker, Patentanwälte

(57) **Zusammenfassung**

Die Erfindung betrifft ein Küchengerät (1) zum Verkosten von Speisen mit einem einen Griff (4) aufweisenden Geräteteil (2). Die Erfindung zeichnet sich dadurch aus, daß am Griff (4) eine Halteeinrichtung (10) zum Befestigen des Küchengeräts (1) an einem flächigen Gegenstand vorgesehen ist.

## Beschreibung

Die Erfindung betrifft ein Küchengerät zum Verkosten von Speisen mit einem einen Griff aufweisenden Geräteteil.

Zum Zubereiten einer Mahlzeit muß man die Speisen selbstverständlich abschmecken, um sicherzugehen, daß sie richtig gewürzt sind bzw. um festzustellen, ob sie gar sind. Anschließend muß man den Kochlöffel, den Eßlöffel, die Gabel oder was immer man zum Verkosten verwendet hat, aber wieder ablegen, zum Beispiel weil man beide Hände braucht, um den Topf vom Feuer zu nehmen. Gerade in größeren Küchen fehlt es aber an Ablageflächen in geeigneter Reichweite, wenn man gerade am Herd steht. Wenn außerdem mehrere "herrenlose" Gerätschaften herumliegen, weiß man nicht mehr, wer welches Teil wofür verwendet hat. Man nimmt sich dann einen neuen Löffel bzw. eine neue Gabel.

Aufgabe der Erfindung ist es daher, ein Küchengerät zum Verkosten von Speisen bereitzustellen, bei dem diese Nachteile nicht auftreten.

Die Lösung besteht darin, daß das Küchengerät am Griff eine Halteeinrichtung zum Befestigen an einem flächigen Gegenstand aufweist.

Eine solche Halteeinrichtung, zum Beispiel eine federnde Halteklammer, kann zum Beispiel an der Bekleidung befestigt werden. Dabei kann es sich um die Brusttasche oder Seitentasche eines Jackets, um einen Schürzenbund und ähnliches handeln. Damit ist die Gerätschaft zum einen "aus dem Weg" und zum anderen immer demjenigen zuzuordnen, der sie auch benutzt.

Denkbar sind auch andere Halteeinrichtungen, bezogen auf andere flächige Gegenstände, z.B. Magneten für eine Metallfläche, Nadeln für eine Stoffbahn, Ösen für einen Haken oder Knopf zum Beispiel an der Kleidung etc.

Vorteilhafte Weiterbildungen ergeben sich aus den Unteransprüchen.

Im folgenden wird ein Ausführungsbeispiel der vorliegenden Erfindung anhand einer Zeichnung näher beschrieben.

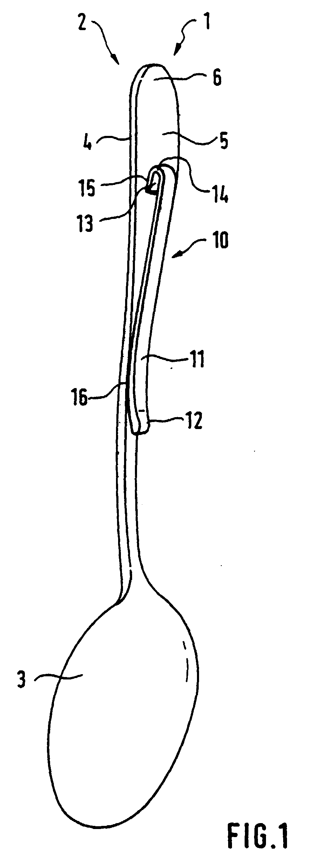

Die einzige Figur 1 zeigt ein Küchengerät 1, nämlich einen Eßlöffel 2, perspektivisch schräg von hinten. Der Eßlöffel 2 weist einen Schöpfteil 3 und einen daran anschließenden Griff 4 mit einem freien Ende 6 auf. An der Rückseite 5 des Griffes 4 ist in der Nähe des freien Endes 6 eine Halteklammer 10 befestigt.

Die Halteklammer 10 weist einen langen Schenkel 11 mit einem verdickten freien Ende 12 und einem kurzen Schenkel 13 auf. Beide Schenkel 12, 13 sind über ein Mittelstück 14 miteinander verbrückt. Die Halteklammer 10 ist mit ihrem kurzen Schenkel 13 an der Rückseite 5 des Griffs 2 befestigt. Im Ausführungsbeispiel sind beide Teile miteinander verschweißt. Es ist aber auch denkbar, daß die Halteklammer 10 und der Griff 4 einstückig sind, wobei dann die Verbindung über den kurzen Schenkel 13 erfolgt.

Der lange Schenkel 12 bildet mit einer gedachten Verlängerung des kurzen Schenkels 13 einen spitzen Winkel, so daß er auf die Rückseite 5 des Griffes 4 zuläuft. Etwas oberhalb des verdickten Endes 12 berührt der lange Schenkel 12 schließlich die Rückseite 5 des Griffs 4. Das an den Berührungspunkt 16 anschließende verdickte Ende 12 ist leicht nach außen, d.h. von der Rückseite 5 weggebogen.

Die Länge des langen Schenkels 13 beträgt etwa die Hälfte bis zwei Drittel der Länge des Griffes 4. Dadurch wird gewährleistet, daß der Eßlöffel 2 nicht abrutschen bzw. aus der Tasche oder dem Schürzenbund oder dergleichen herausrutschen kann.

## Patentansprüche

1. Küchengerät (1) zum Verkosten von Speisen mit einem einen Griff (4) aufweisenden Geräteteil (2), **dadurch gekennzeichnet,** daß es am Griff (4) eine Halteeinrichtung (10) zum Befestigen an einem flächigen Gegenstand aufweist.

2. Küchengerät nach Anspruch 1, dadurch gekennzeichnet, daß die Halteeinrichtung (10) eine federnde Halteklammer ist.

3. Küchengerät nach Anspruch 2, dadurch gekennzeichnet, daß die Halteklammer (10) einen langen Schenkel (11) und einen kurzen Schenkel (13) aufweist, die über ein Mittelstück (14) miteinander verbunden sind.

4. Küchengerät nach Anspruch 3, dadurch gekennzeichnet, daß die Halteklammer (10) über den kurzen Schenkel (13) mit dem Griff (4) verbunden ist.

5. Küchengerät nach einem der Ansprüche 2 bis 4, dadurch gekennzeichnet, daß der lange Schenkel (11) etwa die Hälfte oder zwei Drittel der Länge des Griffs (4) aufweist.

6. Küchengerät nach einem der vorhergehenden Ansprüche, dadurch gekennzeichnet, daß es aus einem einheitlichem Material besteht.

7. Küchengerät nach einem der vorhergehenden Ansprüche, dadurch gekennzeichnet, daß das Geräteteil (2) mit der Halteeinrichtung (10) einstückig ist.

8. Küchengerät nach einem der Ansprüche 1 bis 6, dadurch gekennzeichnet, daß die Halteeinrichtung (10) nachträglich am Griff (4) befestigt ist.

9. Küchengerät nach einem der vorhergehenden Ansprüche, nämlich ein Eßlöffel (2).
